# EUROPEAN PATENT SPECIFICATION

(11) **EP 1 866 550 B1**
(45) Date of publication and mention of the grant of the patent: **29.08.2012**
(21) Application number: 06726644.5
(22) Date of filing: 04.04.2006
(51) Int. Cl.: F16B 7/04, F16B 39/32

(54) **RELEASABLE COUPLING**
LÖSBARE VERBINDUNG
COUPLAGE AMOVIBLE

(30) Priority: 05.04.2005 GB 0506893
(43) Date of publication of application: 19.12.2007
(73) Proprietor: Specmat Limited, Leominster, Herefordshire HR6 9QA (GB)
(72) Inventor: SUDDABY, Thomas, Paul, Newent, GL18 1TZ (GB); NELSON, Sean, Patrick, Wrexham LL13 9GY (GB)
(74) Representative: Evens, Paul Jonathan
(86) International application number: PCT/GB2006/001240
(87) International publication number: WO 2006/106324

(56) References cited:
- EP-A- 0 898 993
- FR-A- 2 843 089
- GB-A- 2 179 090
- US-A- 5 362 110
- US-A- 5 649 780
- US-A- 5 931 598
- US-B1- 6 350 094

## Description

### TECHNICAL FIELD

The present invention relates to a releasable coupling, particularly but not exclusively, for releasably coupling one rigid elongate member to another rigid member,

### BACKGROUND ART

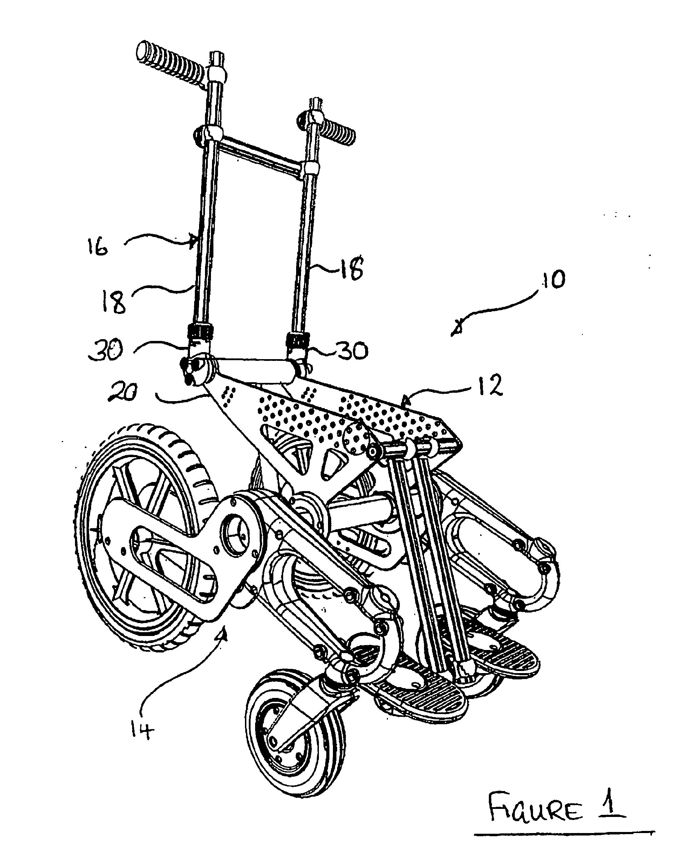

The present applicants have been designing a new modular wheelchair of the kind shown in Figure 1, which makes repeated use of moulded and extruded components. Releasable couplings are required to couple together one extrusion to another component. A releasable coupling with mating screw threads which constrict a collet member has been proposed for securely retaining one end of such an extrusion. Such a coupling is known, for example, from EP 0898 993. Whilst the releasable coupling initially functions as intended, the present applicant has found that such an arrangement is prone to working loose over time.

### DISCLOSURE OF INVENTION

According to the present invention, there is provided apparatus for attaching an elongate member to a rigid member, comprising: a first part comprising a body for attachment to the rigid member, the body defining a bore for slidably receiving an end of the elongate member; a second part having an aperture for receiving therethrough an end of the elongate member, the first and second parts having mating screw threads for releasably attaching the parts together with the aperture registered with the bore; and a collet member for engaging the elongate member when received in the bore, with at least one part being configured to constrict the collet member as the parts are releasably attached together; characterised by a coupling, additional to the mating screw threads, for providing a force to resist rotation of one part relative to the other at least when the parts are attached together, the coupling comprising a cantilevered-beam protruberant member mounted on one part and configured to engage an outer peripheral surface of the other part at least when the parts are releaseably attached together, the cantilevered-beam protuberant member being resiliently flexible, and configured to flex through contact with the outer peripheral surface as the parts are releasably attached together.

The present applicant has appreciated that the inherent frictional resistance between the mating screw threads when the parts are attached together is not necessarily sufficient to retain securely the elongate member in the apparatus over long periods. The coupling may be operable to lock the parts together to prevent accidental or unintentional relative movement of the parts once releasably attached together, or may provide a braking force to bias one part against rotating relative to the other part.

The elongate member may be an extrusion, and may have a circular cross-section or even a non-circular cross section (*e.g*. cruciform). The rigid member may be plate like, or may even be an extrusion itself. When the apparatus is in use, the elongate member may be held in the bore of the body of the first part by the collet member. By releasing the second part from the first part, the collet member is no longer constricted and its grip on the elongate member is relaxed.

The coupling comprises a protuberant member mounted on one part (e.g. first part) and configured to engage an outer peripheral surface of the other part at least when the parts are releasably attached together. The protuberant member is configured as a cantilevered beam. The cantilevered beam is resiliently flexible, with beam flexure being capable of providing a force urging a tip of the beam against the surface when the parts are being releasably attached together.

The surface may have at least one recess for receiving a tip of the protuberant member when the parts are releasably attached together. The tip of the protuberant member may be a snug fit in the at least one recess when registered therewith. In this way, relative rotation of one part relative to the other is resisted at least until the tip is no longer registered in the recess. The surface may be ribbed, with one recess being defined between each pair of adjacent ribs. Such ribbing may allow a user to obtain a firmer grip when rotatably attaching/detaching the parts, particularly if the ribbing is aligned substantially perpendicular to the direction of rotation the screw threads engage/disengage. Such ribbing may also provide a plurality of circumferentially spaced recesses for sequential engagement by the tip as the parts are rotatably attached together.

The bore in the body of the first part may be a blind bore. The bore in the body may have a profile for engaging a corresponding profile on the elongate member. The profiles may be configured such that, when inter-engaged, the elongate member is aligned in a pre-determined orientation about its longitudinal axis relative to the first part. This may be helpful when the elongate member is part of an armrest which is releasably coupled to a chair (*e.g*. a wheelchair). The profiles may also be configured to limit how far the end of the elongate member is insertable in the bore. Again, this may be helpful when the elongate member is part of an armrest and the height of the armrest relative to its chair is important. One or other of the profiles may be adjustable to vary depth of insertion of the elongate member in the bore.

The collet member may be integrally formed in the body of the first part, and may define at least part of the bore. The second part may include a tapered surface for constricting the collet member as the two parts are coupled together.

### BRIEF DESCRIPTION OF DRAWINGS

An embodiment of the invention will now be described, by way of example, and with reference to the accompanying Figures in which:
Figure 1 is a perspective view of a wheelchair framework employing releasable couplings according to an embodiment of the present invention;
Figure 2 shows an exploded perspective view of apparatus embodying the present invention; and
Figure 3 shows a cross-sectional view of the apparatus of Figure 2 as assembled.

### DESCRIPTION OF EMBODIMENT OF INVENTION

Figure 1 shows a wheelchair (10) comprising a seat frame (12) mounted on a chassis (14). The seat framework (12) includes a backrest (16) comprising a pair of upright elongate members (18). Each upright elongate member (18) is releasably coupled to a seat platform (20) by a bracket (30). The bracket (30) may be used elsewhere on the wheelchair (10), e.g. bracket (30) may be used to couple an armrest (not shown) to seat platform (20).

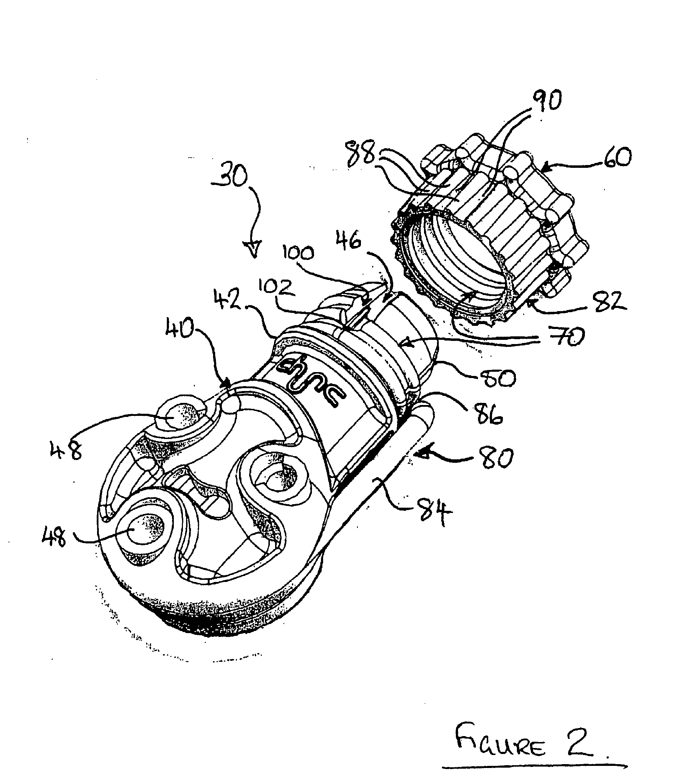

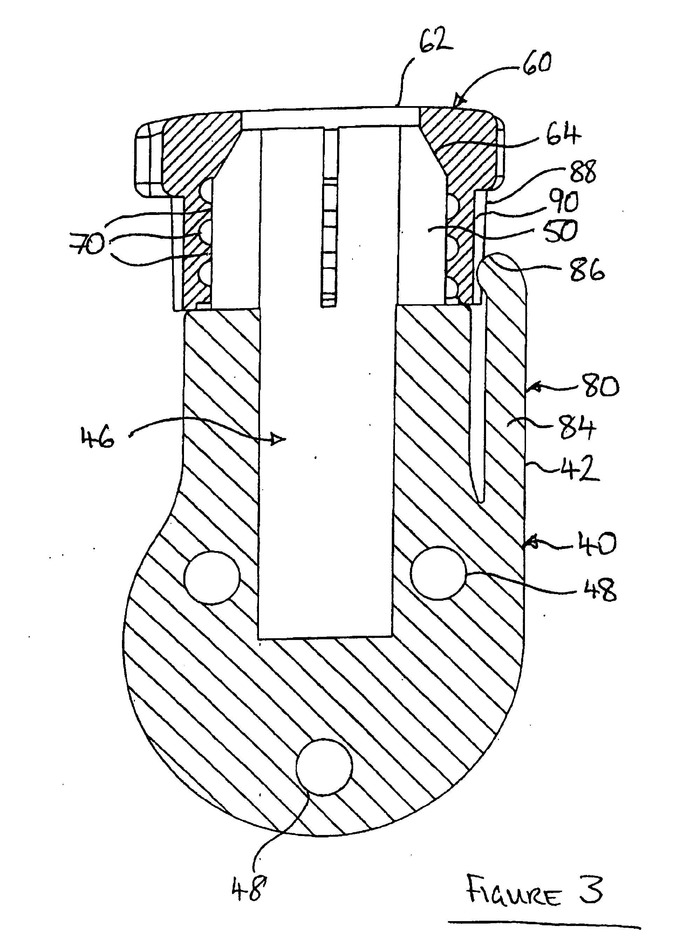

Figures 2 and 3 show the bracket (30) in more detail, as used to couple upright elongate member (18) to seat platform (20). The bracket (30) comprises a first part (40) and a second part (60). The first part (40) includes a body (42) defining a blind bore (46) for receiving an end of elongate member (18). The body (42) is bolted with bolts extending through holes (48) to seat platform (20), and includes a collet member (50) defining part of bore (46). The second part (60) has an aperture (62) through which an end of the elongate member (18) is a sliding fit. The first and second parts (40,60) have mating screw threads (70) for releasably attaching one part to the other, with the aperture (62) in registration with bore (46). As the mating screw threads (70) are tightened, tapered surface (64) in the second part (60) urges the collet member (50) to constrict. In this way, an end of elongate member (18) may be gripped by the collet member (50).

The first part (40) includes a coupling (80) - additional to the mating screw threads (70) - for engaging an outer peripheral surface (82) of the second part (60). The coupling (80) comprises cantilevered beam member (84) with a tip (86). The outer peripheral surface (82) of the second part (60) has ribs (88), with a recess (90) defined between each adjacent pair of ribs (88). The cantilevered beam member (84) is resiliently flexible and configured such that tip (86) fits snugly in one of the recesses (90) when the parts are attached together. Once the tip (86)is snugly received in a recess (90), relative rotation of the parts (40,60) requires the cantilevered beam member (84) to flex, and this flexure provides a force resisting further rotation of the parts (40,60).

The bore (46) in the body (42) of the first part (40) includes a groove (100) for slidably receiving a protuberant bolt (not shown) on one end of elongate member (18). When the bolt is received in the groove (100), the relative orientation of the elongate member (18) to the first part (40) cannot vary. A predetermined rotational orientation may be useful, e.g. when securing armrest using bracket (30). The protuberant bolt may be removed and inserted in a different position along the elongate member (18). In this way, the bolt may engage a stop or end (102) in the groove (100), before an end of elongate member (18) reaches the bottom of blind bore (46).

## Claims

1. Apparatus (30) for attaching an elongate member (18) to a rigid member (20), comprising:
a first part (40) comprising a body (42) for attachment to the rigid member, the body defining a bore (46) for slidably receiving an end of the elongate member;
a second part (60) having an aperture (62) for receiving therethrough said end of the elongate member, the first and second parts having mating screw threads (70) for releasably attaching the parts together with the aperture registered with the bore;
a collet member (50) for engaging the elongate member when received in the bore, with at least one part being configured to constrict the collet member as the parts are releasably attached together;
and a coupling (80), additional to the mating screw threads, for providing a force to resist rotation of one part relative to the other at least when the parts are attached together;
**characterised in that** the coupling (80) comprises a cantilevered-beam protuberant member (84,86) mounted on one part and configured to engage an outer peripheral surface (82) of the other part (60) at least when the parts are releasably attached together, the cantilevered-beam protuberant member (84,86) being resiliently flexible, and configured to flex through contact with the outer peripheral surface as the parts are releasably attached together.

2. Apparatus according to claim 1, in which the surface has at least one recess (90) for receiving a tip (86) of the protuberant member (84,86) when the parts are releasably attached together.

3. Apparatus according to claim 2, in which the surface (82) is ribbed, with one recess (90) being defined between each pair of adjacent ribs (88).

4. Apparatus according to any one of the preceding claims, in which the body (42) defines a blind bore (46).

5. Apparatus according to any one of the preceding claims together with an elongate member co-operating therewith, in which the bore (46) has a profile for engaging a corresponding profile on the elongate member.

6. Apparatus according to claim 5, in which the bore profile comprises a groove (100) for slidably receiving a protuberance mounted on the elongate member (18).

7. Apparatus according to any one of the preceding claims, in which the collet member (50) is coupled to the first part (40) and defines at least a portion of the bore (46).

8. Apparatus according to claim 7, in which the second part (60) includes a tapered surface (64) for urging the collet member (50) so as to restrict the bore (46) as the two parts are attached together.

## Patentansprüche

1. Vorrichtung (30) zum Befestigen eines länglichen Elements (18) an einem starren Element (20), die Folgendes umfasst:
einen ersten Teil (40), der einen Körper (42) zum Befestigen an dem starren Element umfasst, wobei der Körper eine Bohrung (46) zum gleitenden Aufnehmen eines Endes des länglichen Elements definiert;
einen zweiten Teil (60) mit einer Öffnung (62) zum Aufnehmen des genannten Endes des länglichen Elements darin, wobei der erste und der zweite Teil zusammenpassende Schraubgewinde (70) zum lösbaren Befestigen der Teile aneinander aufweisen, während die Öffnung mit der Bohrung fluchtet;
ein Spannhülsenelement (50) zum Eingreifen in das längliche Element, wenn dieses in der Bohrung aufgenommen ist, wobei wenigstens ein Teil so konfiguriert ist, dass er das Spannhülsenelement einspannt, wenn die Teile lösbar aneinander befestigt sind;
und eine Kupplung (80), zusätzlich zu den zusammenpassenden Schraubgewinden, zum Erzeugen einer Kraft zum Verhindern einer Rotation von einem Teil relativ zum anderen wenigstens dann, wenn die Teile aneinander befestigt sind;
**dadurch gekennzeichnet, dass** die Kupplung (80) ein vorstehendes Element (84, 86) in Form eines freitragenden Trägers umfasst, der an einem Teil montiert und so konfiguriert ist, dass er in eine äußere Umfangsfläche (82) des anderen Teils (60) wenigstens dann eingreift, wenn die Teile lösbar aneinander befestigt sind, wobei das vorstehende Element (84, 86) in Form eines freitragenden Trägers federnd flexibel und so konfiguriert ist, dass er sich bei Kontakt mit der äußeren Umfangsfläche biegt, wenn die Teile lösbar aneinander befestigt werden.

2. Vorrichtung nach Anspruch 1, wobei die Oberfläche wenigstens eine Aussparung (90) zum Aufnehmen eines Endes (86) des vorstehenden Elements (84, 86) hat, wenn die Teile lösbar aneinander befestigt sind.

3. Vorrichtung nach Anspruch 2, wobei die Oberfläche (82) gerippt ist, wobei eine Aussparung (90) zwischen jedem Paar benachbarter Rippen (88) definiert ist.

4. Vorrichtung nach einem der vorherigen Ansprüche, wobei der Körper (42) eine Blindbohrung (46) definiert.

5. Vorrichtung nach einem der vorherigen Ansprüche zusammen mit einem damit zusammenwirkenden länglichen Element, in dem die Bohrung (46) ein Profil zum Eingreifen in ein entsprechendes Profil an dem länglichen Element hat.

6. Vorrichtung nach Anspruch 5, bei der das Bohrungsprofil eine Nut (100) zum gleitenden Aufnehmen eines an dem länglichen Element (18) vorgesehenen Vorsprungs umfasst.

7. Vorrichtung nach einem der vorherigen Ansprüche, wobei das Spannhülsenelement (50) mit dem ersten Teil (40) gekoppelt ist und wenigstens einen Abschnitt der Bohrung (46) definiert.

8. Vorrichtung nach Anspruch 7, wobei der zweite Teil (60) eine sich verjüngende Fläche (46) aufweist, um das Spannhülsenelement (50) so zu drücken, dass es die Bohrung (46) verengt, wenn die zwei Teile aneinander befestigt werden.

## Revendications

1. Appareil (30) pour attacher un élément allongé (18) à un élément rigide (20), comprenant :
une première partie (40) comportant un corps (42) en vue d'une fixation à l'élément rigide, le corps définissant un alésage (46) pour recevoir de façon coulissante une extrémité de l'élément allongé ;
une seconde partie (60) avec une ouverture (62) pour recevoir à travers celle-ci ladite extrémité de l'élément allongé, les première et seconde parties étant dotées de filets de vis appariés (70) destinés à attacher les parties l'une à l'autre de façon détachable alors que l'ouverture est alignée avec l'alésage ;
un élément bague (50) pour être solidaire de l'élément allongé au moment de sa réception dans l'alésage, alors qu'une partie au moins est configurée de façon à resserrer l'élément bague au fur et à mesure que les parties sont attachées l'une à l'autre de façon détachable ;
et un couplage (80), venant s'ajouter aux filets de vis appariés, afin de procurer une force destinée à résister à la rotation d'une partie par rapport à l'autre tout au moins lorsque les parties sont attachées l'une à l'autre ;
**caractérisé en ce que** le couplage (80) comporte un élément saillant à montant en porte-à-faux (84, 86) monté sur une partie et configuré de façon à être solidaire d'une surface périphérique externe (82) de l'autre partie (60) tout au moins lorsque les parties sont attachées l'une à l'autre de façon détachable, l'élément saillant à montant en porte-à-faux (84, 86) étant élastiquement flexible et configuré pour se déformer en raison du contact avec la surface périphérique externe au fur et à mesure que les parties sont attachées l'une à l'autre de façon détachable.

2. Appareil selon la revendication 1, dans lequel la surface possède au moins un évidement (90) pour recevoir un bout (86) de l'élément saillant (84, 86), lorsque les parties sont attachées l'une à l'autre de façon détachable.

3. Appareil selon la revendication 2, dans lequel la surface (82) est nervurée, alors qu'un évidement (90) est défini entre chaque paire de nervures adjacentes (88).

4. Appareil selon l'une quelconque des revendications précédentes, dans lequel le corps (42) définit un alésage borgne (46).

5. Appareil selon l'une quelconque des revendications précédentes, en conjonction avec un élément allongé qui coopère avec celui-ci, dans lequel l'alésage (46) présente un profil destiné à être solidaire d'un profil correspondant sur l'élément allongé.

6. Appareil selon la revendication 5, dans lequel le profil de l'alésage comporte une rainure (100) afin de recevoir de façon coulissante une saillie laquelle est montée sur l'élément allongé (18).

7. Appareil selon l'une quelconque des revendications précédentes, dans lequel l'élément bague (50) est accouplé à la première partie (40) et définit au moins une portion de l'alésage (46).

8. Appareil selon la revendication 7, dans lequel la seconde partie (60) englobe une surface biseautée (64) destinée à solliciter l'élément bague (50) de sorte à réduire l'alésage (46) au fur et à mesure que les deux parties sont attachées l'une à l'autre.
